# EUROPEAN PATENT SPECIFICATION

(11) **EP 1 022 743 B1**
(45) Date of publication and mention of the grant of the patent: **15.09.2004**
(21) Application number: 98961261.9
(22) Date of filing: 22.12.1998
(51) Int. Cl.: G11B 33/04

(54) **CASE FOR DISC-SHAPED OPTICAL RECORDING MEDIUM SUCH AS CD, DVD OR THE LIKE**
BEHÄLTER FÜR PLATTENFÖRMIGE OPTISCHE AUFZEICHNUNGSTRÄGER WIE CD, DVD ODER DERGLEICHEN
ETUI POUR SUPPORTS D'ENREGISTREMENT OPTIQUE SOUS FORME DE DISQUE, COMME PAR EXEMPLE DES CD, DVD OU AUTRES

(30) Priority: 19.01.1998 ES 9800127 U; 13.11.1998 ES 9802865 U
(43) Date of publication of application: 26.07.2000
(73) Proprietor: Magnetic Imatge, S.A., 03440 Ibi (ES); Cervic, S.A., 03440 Ibi (ES)
(72) Inventor: CERDA VILAPLANA, Gustavo, E-03440 Ibi (ES); CERDA TORRES, Ruben, E-03440 Ibi (ES)
(74) Representative: De Arpe Fernandez, Manuel
(86) International application number: PCT/ES1998/000352
(87) International publication number: WO 1999/036919

(56) References cited:
- WO-A1-88/06559
- WO-A1-97/36298
- WO-A1-97/41563
- US-A- 5 515 968

## Description

The present invention refers to a case for disc-shaped magnetic recording carriers in formats such as digital video discs, also known as digital versatile discs, (DVD) or compact discs (CD) and like, that have an improved device for the engagement and release of the disc.

Diverse cases of this type are known at the moment, the most mentioned up to now being the CD cases for audio and data and software.

According to the state of the art, these cases include in their central part a projecting formation for a fitted or firm engagement of the disc through its central hole. This projecting formation is biased by compression, so that the disc can be released from its fitted engagement, exercising a pressure on the mentioned projection.

In particular, through the application ES-U-9703025 a case of this type is known where the mentioned central formation is formed in a button-shape with elastics lateral branches, connected by their lower end with some tilted wings, all this from the material of the case wall, and where, also, the aforementioned elastic wings form an angle near the wall of the cover to guarantee a "sinking" of this elastic portion in order to release the engagement in the central hole of the disc.

Also, according to this document relative to the prior art, it is revealed that the disc engaged in such portion is slightly flexed in a radial direction thanks to circumferencial projections provided in a bottom wall of the case on which it is supported by its exterior edge.

US 5515968A discloses a case for containing an optic disc 12 which has a cover 32 articulated through a central portion 42, a box portion 50 on whose bottom wall 52 a hub or rosette 54 is provided for engaging tightly to the central hole 14 of the optical disc 12 which is formed on a cylindrical platform 62 projecting from the said bottom wall 52. The hub or rosette 54 is formed by a number of pins 58 in the shape of cylindrical wall segments which detach perpendicularly upwards from sections of the said cylindrical platform 62 delimited by radial slits 166-168. Here, on the one hand in order to hold or release a disc 12 through its central hole 14, the pins 58 must be biased in the direction of the geometric centre of the hole 14 and these pins 58 are bent in the direction of the disc centre over a magnitude which is directly proportional to the intensity of the strength applied thereto, in this way, applying an excessive strength on the pins may produce bending fatigue in the material of the cylindrical platform 62 into which the pins are inserted that may well lead to irreversible plastic deformation in that material; on the other hand, by virtue of the cylindrical wall shaped configuration of these pins 58, a very large area of contact with the central hole 14 of the disc 12 is provided, hindering the disc from being released in a simple fashion.

WO 97/41563 discloses a case for containing a compact disc which has a bottom wall 2 in the shape of a box in the centre of which at least two arms 1 resiliently cantilevered are provided, the inside ends of which form a button shaped member 4 that have projections 4A in the side wall for engaging in the inside edge of the central hole of a compact disc. Here, on the one hand in order to secure the compact disc the elastic arms 1 descend towards the bottom wall and their inside ends approach each other so that the side projections 4A of the button shaped member 4 can engage in the central hole of the disc; on the other hand, in order to release the disc the button shaped member is operated from above in a direction perpendicular to the bottom wall 2, so that the elastic arms 1 bend towards the bottom wall so that the projections 4A of the button member 4 stop engaging in the central hole of the disc thus releasing it. Therefore, it is not possible in this device to hold or release the disc by operating crosswise to the button member and the bending force is supported by the ends of the elastic arms 1 in the area of insertion to the bottom wall 2.

WO 88/06559 discloses a case for laser audio discs with a cover portion 4 which is articulated, through a central part 8, to a base portion 6 in the centre of whose bottom wall retention means are provided with a number of elastic fingers 34 formed on a frustum platform 30 which rises from the bottom wall and acts as a support for a disc area close to its central hole and additionally ribs 24 are provided in the base portion 6 for supporting the disc face, which radially extend from the bottom of the platform 30; in a particular embodiment, the retention means are provided as sections of a cylindrical wall extending perpendicularly to the box portion. Here, on the one hand in order to hold or release a disc through its central hole, the fingers forming the retention means, must be biased in the direction of the geometrical centre of the disc hole and these fingers bent in a direction to the centre of the disc over a magnitude which is directly proportional to the intensity of the strength applied thereto, in this way, applying an excessive strength on the fingers may reduce bending fatigue of the material of the platform into which these fingers are inserted with the problem of this material producing permanent plastic deformation; on the other hand, by virtue of the cylindrical wall shaped configuration of these fingers a very large area of contact is provided with the central hole of the disc hindering the disc from being released in a simple fashion.

These characteristics of the prior art form part of the preamble of the independent claim 1.

In this case, the invention starts from the fact that results similar to the afore described may be achieved as regards the secure fitted engagement of the disc which is also easy to release, when, as per claim 1, a platform for support of the disc is configured in the bottom wall of the case with a raised cylindrical formation from which stems or spigots detach upwards orthogonally to the plane of the bottom wall, and each of these spigots or stems has a retention cog at its top end in pointed form outwards in relation to the centre of the cylindrical platform, whose stems or spigots can be biased by flexion trough a lateral pressure exercised towards the center of the disc; and also the lower part is distanced in a vertical direction with respect to the bottom wall in a magnitude that approximately corresponds to the thickness of the recording carrier, where:
- centrally to the raised cylindrical formation a prismatic hexagonal projection is formed; and
- these spigots or stems surrounding the prismatic hexagonal projection are provided with straight wall segments lying in planes parallel to alternate side faces of the prismatic hexagonal projection and very close to said side faces to limit the lateral run towards the centre of the disc of said spigots or stems.

But an arrangement like this can also operate according to the sinking principle explained in connection with the foregoing documents WO 97/41563 and ES-U-9703025. In fact, according to the other preferred embodiment of the invention, according to claim 2, it suffices to form an articulation or hinge joint around the cylindrical support platform of the disc constituted by a surrounding area with a reduced wall thickness by a neck-shaped depressed portion and a portion raised in a cord form, so that, in this case, it is an advantage, compared to the known cases, the elimination of openings to the exterior of the case that make possible the entry of dust and other harmful external influences, such as moisture and excessive heat.

Other characteristics and advantages of the invention will be clearer from the following description carried out with the help of the attached drawings applicable to non-limiting embodiment examples and where:
Figure 1 shows a view in perspective of a case for disc-shaped magnetic recording carriers according to the invention.
Figure 2, illustrates a view in perspective of a first embodiment of the device for engagement and release of the disc from the case according to the invention.
Figure 3 is a top view of the device according to figure 2.
Figure 4, shows a partial section view through the line A-A of figure 3.
Figure 5, illustrates a view in perspective of a second embodiment of the device for engagement and release of the disc from the case according to the invention.
Figure 6, is a view comparable to the previous one but divided according to a diameter of the device for engagement and release of the disc according to figure 5.
Figure 7, shows a top view of the device for engagement and release of the disc from figure 5.

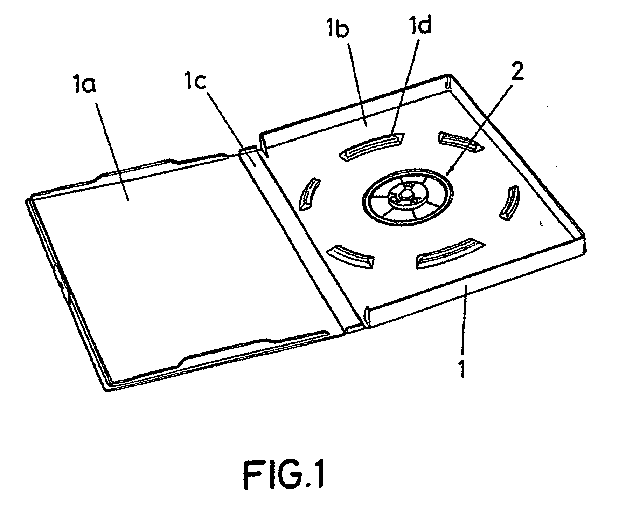

With regards to figure 1 is observed that case 1 is shaped as is described, for example, in the mentioned application ES-U-9703025, similarly to a well-known case for video tapes, that is to say with bindings or covers 1a, 1b joined around a central portion or body 1c, being, also configured in the cover 1b, before the bottom wall, circumferential projections 1d for support of the edge or external periphery of the disc (no represented) with the purpose thereby described.

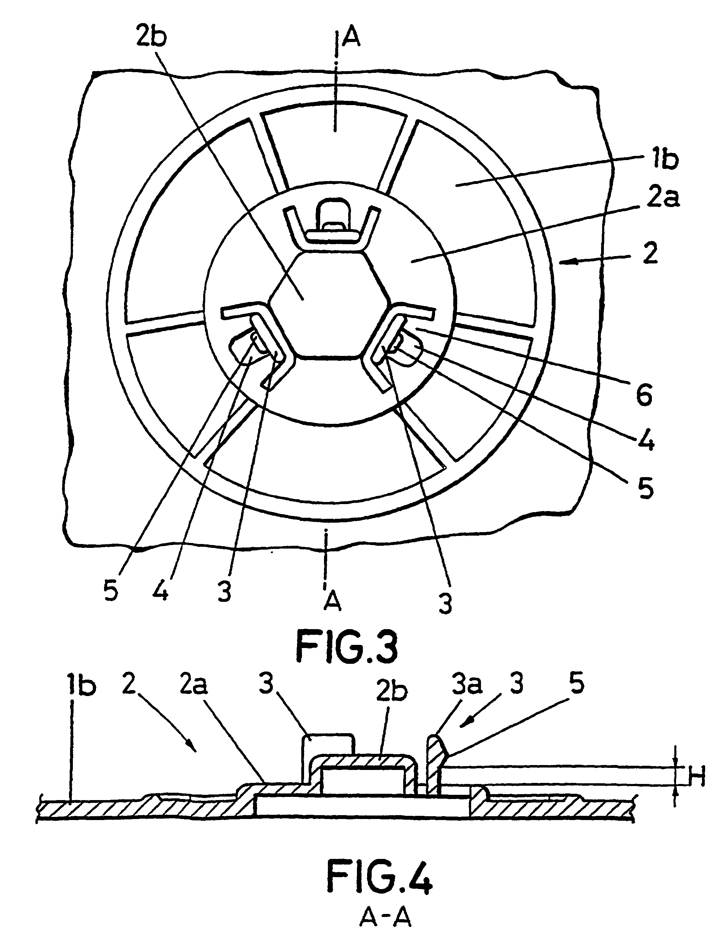

In reference to the figures 2, 3 and 4 it can be observed that on the bottom wall 1b, preferably integrally with it, conformed is a cylindrical platform 2 with an also cylindrical formation 2a but with a smaller diameter assigned for the support of a DVD disc type or like. Also, on such formation 2a concentrically formed around a prismatic-hexagonal projection are stems or spigots 3 that detach ortogonally upwards, each one of which has a retention cog 5 in pointed form directed outwards.

These stems or spigots 3 are found to be delimited on their lower part through notches 4 performed in the mentioned cylindrical formation 2a, so that they are integrally joined to this platform of support 2 through portions 6 of the material of this cylindrical formation 2a.

As the constituent material of the bottom wall 1b of case 1 is a rigid, but relatively elastic plastic material, from the above mentioned configuration ensues a capacity of the stems or spigots 3 for flexing through a force exercised perpendicularly on their free extremity 3a.

This way, a DVD type disc or like can be easily engaged through its central hole on the mentioned stems or spigots 3, remaining held there thanks to the retention cogs 5 in pointed form, lying supported on platform 2, and it can be easily removed from this engagement, exercising a force "inwards" on the extremities 3a of, at least, two of these stems or spigots 3.

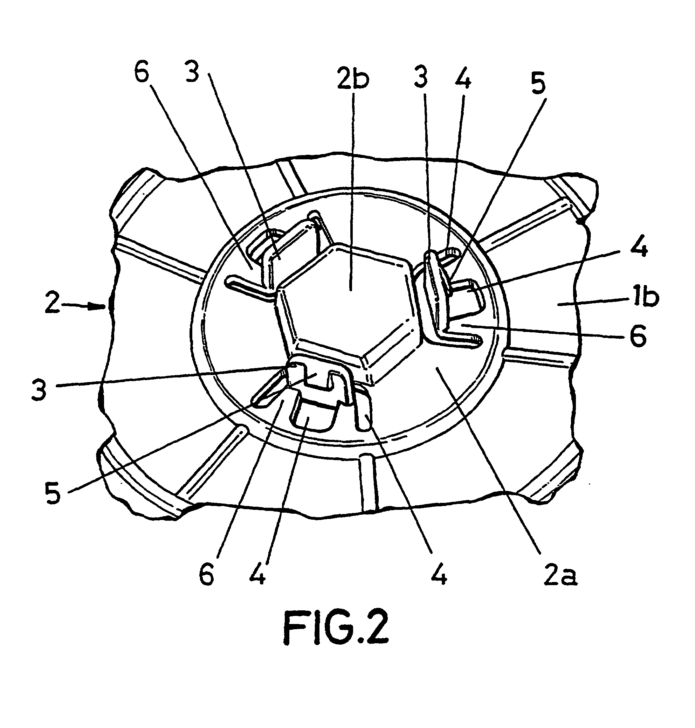

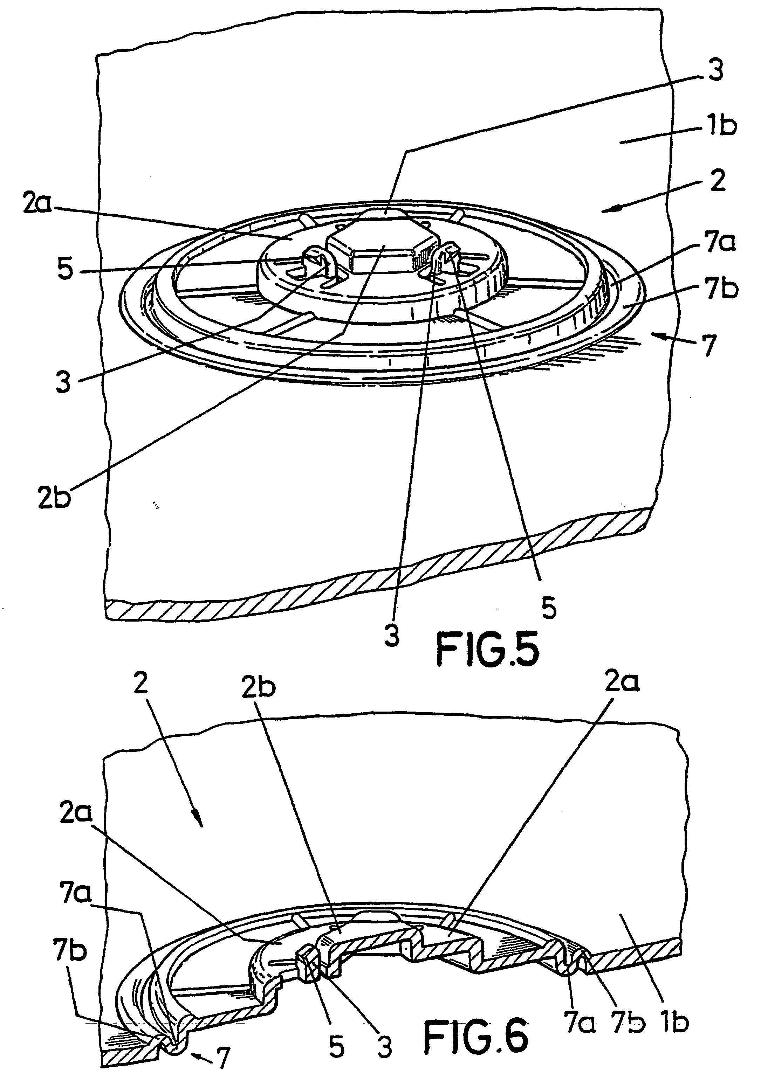

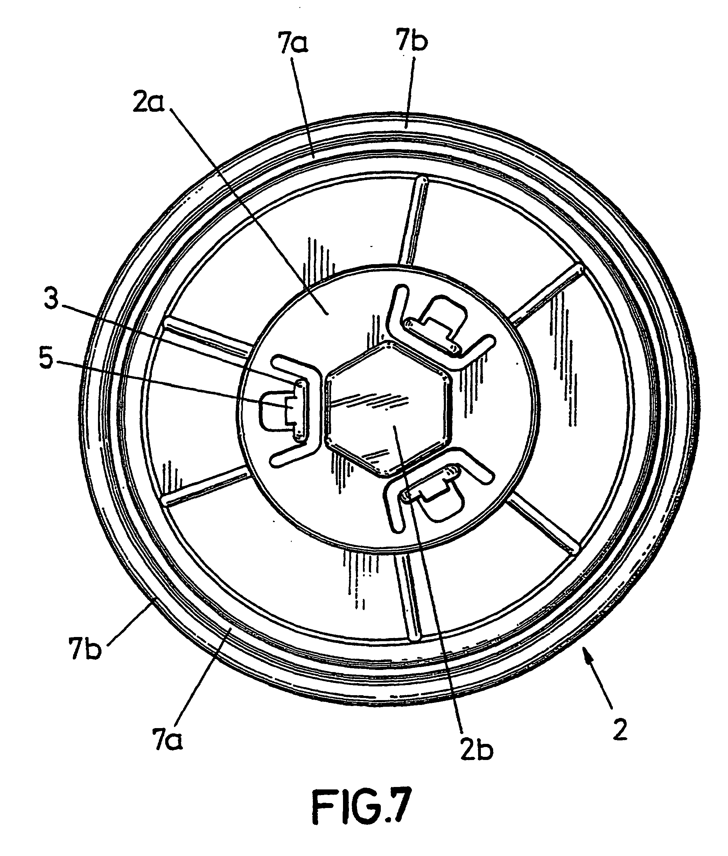

With regards to figures 5, 6 and 7, described now will be a second embodiment of the invention, and in those figures for elements identical to those of the previous embodiment of the invention the same numerical references are utilized.

Here, as before, on the bottom wall 1b, of case 1, is formed a cylindrical platform 2 with an also cylindrical formation 2a with a smaller diameter assigned for the support of a DVD type disc or like; also, over such formation 2a and around a prismatic-hexagonal projection 2b, now with button or push-button functions, concentrically formed are stems or spigots 3 that detach ortogonally upwards and each one of these has a retention cog 5 in pointed form directed outwards.

According to this second embodiment of the invention, the cylindrical platform 2, is connected jointly with the bottom wall 1b through a jointed hinge 7 surrounding and molded integrally as an area with a thickness reduced by a neck-shaped depressed portion 7a and a raised portion 7b in a cord form.

In this embodiment, the DVD disc supported on the cylindrical formation 2a and held there through the cogs 5 of the stems or spigots 3, may be released by pressing the prismatic-hexagonal button or push-button 2b, given that the cylindrical platform 2 will descend thanks to the surrounding jointed hinges 7.

According to the invention it is a preferred embodiment of the invention when up to three jagged stems or spigots 3 are provided.

As will be easily understood by the skilled in the art, this device has a structure that is specially appropriate to be shaped in molding processes for plastic material integrally with the bottom wall of a case in a box shape. Also, when the device is shaped according to the second embodiment described, that is to say, according to the principle known as "sinking", the existence of grooves that result according to the previous technique are eliminated, to therefore avoid the entrance of dust and undesirable external influences such as moisture, excessive heat, etc., in the case that may damage the integrity of the magnetic recording carrier.

## Claims

1. Case for disc shaped recording carrier such as CD, DVD and the like, of the type that includes, hinged to a central portion or body (1c), a cover (1a) and a box portion or bottom wall (1b)with a projecting formation or rosette for a fitted engagement of the central hole of the disc shaped recording carrier, as well as circumferential projections (1d) to sustain the external edge of the said disc, where
- in the mentioned bottom wall (1b) is configured a cylindrical platform (2) provided with a raised cylindrical formation (2a) from which spigots or stems (3) detach upwards perpendicularly to the plane of the bottom wall which are linked on the lower part through portions (6) delimited by through notches (4) preformed in such raised cylindrical formation (2a),
- each one of these spigots or stems (3) have in their upper end (3a) a retention cog (5) in a pointed form directed outwards with respect to the centre of the cylindrical platform and whose lower part is distanced in a vertical direction with respect to the bottom wall by a magnitude (H) that approximately corresponds to the thickness of the recording carrier,
**characterised, in that**:
- a prismatic hexagonal projection (2b) is formed in the centre of the raised cylindrical formation (2a); and
- these spigots or stems surrounding the prismatic hexagonal projection (2b) are provided with straight wall segments lying in planes parallel to alternate side faces of the prismatic hexagonal projection and very close to said side faces to limit the lateral run towards the centre of the disc of said spigots or stems.

2. Case according to claim 1, **characterized in that**:
- the cylindrical platform (2) is joined to the bottom wall (1b) through a surrounding jointed hinge (7), moulded integrally in such bottom wall (1b) as an area with a wall thickness reduced by a neck-shaped depressed portion (7a) and a raised portion (7b) in a cord form.

3. Case according to claims 1 or 2, **characterized in that** at least, three jagged stems or spigots (3) are provided.

## Patentansprüche

1. Behälter für Plattenförmige Optische Aufzeichnungsträger, wie zum Beispiel CD, DVD und Ähnliches von der Art, die bestehen aus einem Deckel (1a) frei beweglich auf einem mittigen Teil oder Kernstück (1c) und einem Gehäuseteil oder der Rückwand (1b), mit einer Ausbildung in Form eines Überstandes oder einer Rosette zur eingepassten Verbindung mit der mittigen Bohrung des plattenförmigen Aufzeichnungsträgers sowie in Form von Umfangsüberständen (1d) zwecks Stützung des äusseren Randes besagter Platte, wobei
- Die genannte Rückwand (1b) als zylinderförmige Plattform ausgelegt ist (2), die mit einer zylinderförmigen Erhöhung versehen ist (2a), von der Stäbe oder Stifte (3) senkrecht zur Rückwandfläche nach oben verlaufen, die an ihrem unteren Ende über Teile miteinander verbunden sind (6), die durch durchlaufende Vertiefungen markiert sind (4), die an dieser zylinderförmigen Erhöhung vorgenommen wurden (2a);
- Jeder dieser Stäbe oder Stifte (3) hat am oberen Ende (3a) einen Rückhaltezahn (5) in Form eines bezüglich der Mitte der zylinderförmigen Plattform nach aussen gerichteten Schnabels, dessen unterer Teil in senkrechter Richtung bezüglich der Rückwand eine Entfernung von einer Grösse (H) hat, die ungefähr der Dicke des Aufzeichnungsträgers entspricht **dadurch gekennzeichnet, dass**:
- Eine prismatisch-sechseckige Erhebung (2b) in der Mitte des zylinderförmigen Überstandes (2a); ausgebildet ist, und
- Diese Stäbe oder Stifte (3), welche die prismatisch-sechseckige Erhebung umgeben (2b), sind als Segmente der geraden Wand vorgesehen, die auf parallel verlaufenden Ebenen mit abwechselnden seitlichen Vorderflächen der prismatisch-sechseckigen Erhebung verlaufen, und zwar sehr nah zu diesen seitlichen Vorderflächen, um den seitlichen Weg der besagten Stäbe oder Stifte zur Mitte der Platte hin einzugrenzen.

2. Behälter gemäss Anspruch 1, **dadurch gekennzeichnet, dass**:
- Die zylinderförmige Plattform (2) an der Rückwand (1b) über eine diese umfassende Scharnierverbindung (7) befestigt ist, die vollständig an dieser Rückwand in Form eines Bereichs mit geringerer Wanddicke eingepasst ist, mit einem versenkten Teil (7a) in Form einer Schlucht und mit einem erhöhten Teil (7b) in Form einer Schnur.

3. Behälter gemäss den Ansprüchen 1 oder 2, **dadurch gekennzeichnet, daß** mindestens drei gezahnte Stäbe oder Stifte (3) vorgesehen sind.

## Revendications

1. Etui pour supports d'enregistrement optique sous forme de disque tels que CD, DVD et semblables à ce type comprenant un couvercle (1a) et une portion de boîtier ou paroi de fond (1b) articulés sur une portion ou dos central (1c) avec une formation en projection ou rosette pour l'accouplement encastré du trou central du support d'enregistrement sous forme de disque, ainsi que des projections en circonférences (1d) pour l'appui du bord extérieur du disque mentionné, où
- sur la paroi de fond (1b) mentionnée, il y a une plate-forme cylindrique (2) munie d'une formation cylindrique élevée (2a) de laquelle des tiges ou goujons (3) se dégagent vers le haut perpendiculaire par rapport au plan de la paroi de fond qui sont unis par leur partie inférieure par le biais de portions (6) délimitées par des entailles passantes (4) pratiquées sur la formation cylindrique élevée (2a) mentionnée ;
- sur son extrémité supérieure (3a), chacune des tiges ou goujons (3) a une dent de rétention (5) en forme de pic dirigé vers l'extérieur par rapport au centre de la plate-forme cylindrique et dont la partie inférieure est éloignée dans le sens vertical par rapport à la paroi de fond d'une grandeur (H) qui correspond approximativement à l'épaisseur du support d'enregistrement, **caractérisé en ce que** :
- une projection prismatique-hexagonale (2b) est formée sur le centre de la formation cylindrique en saillie (2a) ; et
- ces tiges ou goujons (3) qui entourent la projection prismatique-hexagonale (2b) sont prévus comme des segments de paroi droite qui gisent sur des plans parallèles aux faces latérales alternes de la projection prismatique-hexagonale et très près des faces latérales mentionnées afin de limiter le parcours latéral des tiges et goujons cités vers le centre du disque.

2. Etui selon la revendication 1, **caractérisé en ce que**:
- la plate-forme cylindrique (2) est articulée à la paroi de fond (1b) par le biais d'un joint à charnière entourant (7), totalement moulé sur la paroi de fond mentionnée comme une zone avec une épaisseur de paroi diminuée avec une portion enfoncée (7a) en forme de gorge et une portion élevée (7b) en forme de cordon.

3. Etui selon les revendications 1 ou 2, **caractérisé en ce que** trois tiges ou goujons (3) dentés au moins sont prévus.
